# EUROPÄISCHE PATENTSCHRIFT

(11) **EP 1 567 406 B1**
(45) Veröffentlichungstag und Bekanntmachung des Hinweises auf die Patenterteilung: **26.04.2006**
(21) Anmeldenummer: 03750702.7
(22) Anmeldetag: 09.10.2003
(51) Int. Cl.: B62D 65/00

(54) **VERFAHREN ZUR MONTAGE UND BEARBEITUNG EINES ANBAUTEILS SOWIE ADAPTER**
METHOD FOR ASSEMBLING AND WORKING ON AN ADD-ON PART, AND AN ADAPTER
PROCEDE DE MONTAGE ET D'USINAGE D'UNE PIECE A RAPPORTER ET ADAPTATEUR APPROPRIE

(30) Priorität: 28.11.2002 DE 10255421
(43) Veröffentlichungstag der Anmeldung: 31.08.2005
(73) Patentinhaber: Volkswagen Aktiengesellschaft, 38436 Wolfsburg (DE)
(72) Erfinder: JANKOWSKI, Martina, 38446 Wolfsburg (DE); SCHULZ, Berthold, 38446 Wolfsburg (DE); LAUENROTH, Andreas, 38550 Isenbüttel (DE)
(74) Vertreter: Basfeld, Rainer
(86) Internationale Anmeldenummer: PCT/EP2003/011179
(87) Internationale Veröffentlichungsnummer: WO 2004/048184

(56) Entgegenhaltungen:
- EP-A- 1 215 065
- WO-A-03/068545
- DE-A- 19 946 307
- US-A- 5 181 307
- PATENT ABSTRACTS OF JAPAN vol. 1998, no. 06, 30. April 1998 (1998-04-30) & JP 10 045066 A (NISSAN MOTOR CO LTD), 17. Februar 1998 (1998-02-17)

## Beschreibung

Die vorliegende Erfindung betrifft ein Verfahren zur Montage und Bearbeitung eines mindestens ein Innenblechteil und mindestens ein Außenblechteil umfassenden Anbauteils einer Karosserie eines Kraftfahrzeugs, bei dem man entweder nur das Innenblechteil ohne das Außenblechteil oder nur das Außenblechteil ohne das Innenblechteil oder Außenblechteil und Innenblechteil in der für das Anbauteil vorgesehenen Position an der Karosserie anbringt, bei dem danach mindestens ein Arbeitsschritt erfolgt, in dem entweder die Montage eines zusätzlichen Bauteils an Innenblechteil und/oder Außenblechteil oder eine Bearbeitung der Anordnung, insbesondere eine Lackierung, erfolgt und man erst danach Innenblechteil und Außenblechteil zur Schaffung des Anbauteils miteinander verbindet.

Aus dem Stand der Technik ist es grundsätzlich bekannt, Anbauteile für Karosserien von Kraftfahrzeugen, beispielsweise Fahrzeugtüren oder andere bewegliche Anbauteile aus mehreren separaten Teilen zu fertigen, die zunächst für sich gesondert bearbeitet und erst später montiert werden. Die DE 101 06 433 A1 beschreibt ein Verfahren zur Herstellung einer Fahrzeugtür der eingangs genannten Gattung. Bei diesen bekannten Verfahren wird zunächst ein Innenblechteil der Fahrzeugtür ohne das Außenblechteil (Außenhaut) fertig gestellt. Das Innenblechteil wird in einem separaten Vorgang lackiert. An und in das Innenblechteil (Türkörper) werden zusätzliche Bauteile wie zum Beispiel das Türschloss, der Türgriff, Fensterheber, Fensterscheiben usw. in einem eigenen Montagevorgang eingebaut. Zwischenzeitlich und separat dazu wird die Kraftfahrzeugkarosserie sowie ein Außenblechteil für die Tür lackiert. Danach wird das Innenblechteil in den dafür vorgesehenen Karosserieausschnitt eingebaut und abschließend erfolgt die Befestigung des Außenblechteils an den bereits am Kraftfahrzeug befestigten Innenblechteil. Die Lackierung des Außenblechteils zusammen mit der Karosserie des Fahrzeugs hat den Vorteil, dass eine einheitliche Lackierung der Fahrzeugtür und der restlichen Teile der Karosserie im Hinblick auf Struktur, Glanzgrad, Farbton usw, erhalten wird. Weiterhin ist es bei der genannten Vorgehensweise möglich, das Innenblechteil anders zu lackieren als das Außenblechteil, beispielsweise in einem anderen Farbton. Die Montage zusätzlicher Bauteile, die zum Beispiel für eine Fahrzeugtür benötigt werden, am Innenblechteil, vor dessen Verbindung mit dem Außenblechteil, ist vorteilhaft, da dies die Montage wegen der besseren Zugänglichkeit vereinfacht.

Bei dem aus der DE 101 06 433 A1 vorbekannten Verfahren wird die Lage der Fahrzeugkarosserie über Haltevorrichtungen fixiert, die in die an der Karosserie ausgebildeten Wagenheber-Aufnahmen eingreifen. Zusätzlich wird das Innenblechteil der Fahrzeugtür (Türkörper) an einer Relativbewegung zur Karosserie durch entsprechende Vorrichtungen gehindert. Die genannte Druckschrift enthält keine näheren Ausführungen um welcher Art Vorrichtungen es sich dabei handelt. Die Montage des Außenblechteils am Innenblechteil erfolgt über Roboter, wobei die passgenaue Anordnung über optische Einrichtungen kontrolliert wird.

Aus dem Stand der Technik grundsätzlich bekannt sind Verfahren zur Montage und Farbgebung von Kraftfahrzeugen, bei denen das gesamte Kraftfahrzeug einschließlich der Karosserie aus einzelnen Modulen zusammengesetzt wird, die unabhängig voneinander vorgefertigt werden, so dass sie funktionsfähig und gegebenenfalls lackiert für die Endmontage zur Verfügung stehen. Die DE 196 06 779 A1 beschreibt ein solches Verfahren. Verfahren dieser Art haben insbesondere den Vorteil, dass die verschiedenen Module in unterschiedlichen Montagelinien und gegebenenfalls an verschiedenen Orten vorgefertigt werden können. Außerdem ist die getrennte Handhabung der Module z.B. bei der Korrosionsschutzbehandlung und Lackierung vorteilhaft. Bei diesem bekannten Verfahren werden die Türen vor der Anbringung an der Karosserie des Fahrzeugs vollständig vormontiert und lackiert.

Die DE 42 17 771 A1 beschreibt ein Verfahren, bei dem eine Fahrzeugtür im Rohbau über Scharniere an einer noch unbehandelten Fahrzeugkarosserie befestigt wird und anschließend die Karosserie mit der Fahrzeugtür lackiert und getrocknet wird. Zur Ausrüstung der Fahrzeugtür mit Einbauteilen wird die Tür nach der Lackierung wieder von der Karosserie abgenommen, mit den Einbauteilen komplettiert und dann wieder angeschraubt. Bei der Demontage der Tür besteht die Gefahr, dass die im Scharnierbereich zerstörte Lackschicht zu Korrosionsschäden führt. Dies wird über aufwendige Maßnahmen verhindert, z.B. indem vor dem Befestigen der Fahrzeugtür an dem Karosserieblech eine Dichtungszwischenlage befestigt wird. Nachteilig an diesem bekannten Verfahren ist außerdem, dass die bereits vollständig montierte Fahrzeugtür mit Außenblechteil und Innenblechteil gefertigt und lackiert wird und erst danach die Komplettierung der Fahrzeugtür mit zusätzlichen Bauteilen erfolgt, da in diesem Fall deren Montage wegen der schlechten Zugänglichkeit erschwert ist.

Die Aufgabe der vorliegenden Erfindung besteht darin, ein Verfahren zur Montage und Bearbeitung eines mindestens ein Innenblechteil und mindestens ein Außenblechteil umfassenden Anbauteils einer Karosserie eines Kraftfahrzeugs der eingangs der genannten Gattung zur Verfügung zu stellen, welches in einfacher Weise eine genaue Positionierung des Innenblechteils oder des Außenblechteils für die Lackierung mindestens eines dieser Teile mit der Fahrzeugkarosserie einerseits ermöglicht und andererseits eine einfache Komplettierung des Anbauteils mit zusätzlich notwendigen Bauteilen ermöglicht.

Die Lösung dieser Aufgabe liefert ein erfindungsgemäßes Verfahren der eingangs genannten Art mit den kennzeichnenden Merkmalen des Hauptanspruchs. Besonders vorteilhaft ist an der erfindungsgemäßen Lösung auch, dass diese ein hohes Maß an Flexibilität liefert, z.B. im Hinblick auf unterschiedliche Lackierungen des Innenblechteils und des Außenblechteils des Anbauteils der Karosserie, wobei das zuvor erwählte Modulprinzip zur Montage der Fahrzeugkarosserie beibehalten werden kann. Das erfindungsgemäße Verfahren gewährleistet weiterhin eine sehr einfache Montage der für das Anbauteil notwendigen zusätzlichen Bauteile, bei denen es sich z.B. um funktionelle Bauteile für das Anbauteil handelt, beispielsweise Fensterheber, Lautsprecher oder dergleichen bei einer Fahrzeugtür. Der Vorteil der Lackierung des Außenblechteils gemeinsam mit der übrigen Fahrzeugkarosserie kann bei dem erfindungsgemäßen Verfahren genutzt werden. Dies ist wichtig, um zu gewährleisten, dass das Anbauteil in seinem außen sichtbaren Bereich exakt die gleiche Außenhautqualität aufweist, wie die angrenzenden Bereiche der Karosserie. Durch die erfindungsgemäß verwendeten Betriebsmittel ist eine exakte Positionierung des Außenblechteils oder gegebenenfalls auch des Innenblechteils an der für das Anbauteil vorgesehenen Position an der Karosserie während des Lackiervorgangs gewährleistet. Dabei kann das Außenblechteil oder auch das Innenblechteil über die Betriebsmittel so an der Fahrzeugkarosserie befestigt werden, dass die Funktion des Anbauteils gegeben ist, das heißt z.B. bei einer Fahrzeugtür die für die Öffnungsfunktion beziehungsweise Schließfunktion notwendige Schwenkbarkeit. Die erfindungsgemäß verwendeten Betriebsmittel gewährleisten diese Schwenkbarkeit des beweglichen Anbauteils, die sonst bei einer Fahrzeugtür nur nach einer Endmontage gegeben wäre. Dies bedeutet, dass erfindungsgemäß beispielsweise eine Fahrzeugtür in beweglich schwenkbarer Funktion an der Karosserie angebracht werden kann für die Lackierung und weitere Montage, ohne dass die Fahrzeugtür bereits aus Außenblechteil, Innenblechteil und zusätzlichen Bauteilen (Einbauteilen) vollständig montiert wurde. Das erfindungsgemäße Verfahren ermöglicht also die Lackierung des Anbauteils mit der Karosserie in funktionsfähigem Zustand und exakter Positionierung vor der Endmontage des Anbauteils.

Als Betriebsmittel im Sinne der vorliegenden Erfindung dient vorzugsweise wenigstens ein Adapter. Ein solcher Adapter kann beispielsweise ein etwa rahmenartiges Bauteil sein. Ein solches rahmenartiges Bauteil umfasst vorzugsweise wenigstens eine Strebe, weiter vorzugsweise mehrere Streben, die miteinander verbunden sind. Weiterhin umfasst der Adapter vorzugsweise Befestigungselemente zur Anbringung des Innenblechteils oder des Außenblechteils an diesem Adapter. Handelt es sich bei dem erfindungsgemäßen Anbauteil um ein bewegliches Anbauteil, z.B. eine Fahrzeugtür, eine Heckklappe, eine Kofferraumhaube oder dergleichen, dann weist der Adapter vorzugsweise mindestens ein Scharnierelement auf, um die Schwenkbarkeit des beweglichen Anbauteils in dem an der Karosserie angebrachten Zustand zu gewährleisten. Dabei handelt es sich wohlgemerkt nicht um den Endzustand, in dem natürlich auch eine herkömmliche Fahrzeugtür derartige Scharnierelemente aufweist, sondern um einen Zwischenschritt, der insbesondere die genaue Lackierung ermöglicht, wobei in einem darauffolgenden Arbeitsschritt die Betriebsmittel wieder von dem Außenblechteil oder dem Innenblechteil entfernt werden.

Man kann gemäß einer Variante der Erfindung nur das Außenblechteil ohne das Innenblechteil zunächst in der für das Anbauteil vorgesehenen Position an der Karosserie anbringen. In dieser Position erfolgt vorzugsweise in wenigstens einem Schritt eine Lackierung dieser Anordnung. Erst danach erfolgt die Verbindung des Außenblechteils mit dem Innenblechteil zur Schaffung des Anbauteils, wobei vorzugsweise das Innenblechteil zuvor separat lackiert wurde.

Gemäß einer alternativen Variante der Erfindung kann man auch zunächst das Innenblechteil im Rohzustand in der für das Anbauteil vorgesehenen Position an der Karosserie anbringen, danach wenigstens ein zusätzliches Bauteil am Innenblech montieren, dann das Außenblechteil an das Innenblechteil montieren und diese miteinander verbinden, wobei beide Teile in der vorgesehenen Position an der Karosserie verbleiben können und danach die ganze Anordnung lackiert wird. Diese Variante kommt insbesondere dann in Betracht, wenn keine andersartige Lackierung des Innenblechteils gegenüber dem Außenblechteil vorgesehen ist.

Gemäß einer Variante der Erfindung kann man auch Außenblechteil und Innenblechteil in der für das Anbauteil vorgesehenen Position mit Hilfe von Betriebsmitteln an der Karosserie anbringen, wobei dann aber Innenblechteil und Außenblechteil sich zwar an der Karosserie befinden, aber noch nicht miteinander verbunden sind, so dass die Montage zusätzlicher Bauteile vorzugsweise an das Innenblechteil noch möglich ist, wobei erst danach Innenblechteil und Außenblechteil miteinander zu dem Anbauteil verbunden werden.

Die vorliegende Erfindung betrifft weiterhin einen Adapter zur Verwendung in einem Verfahren zur Montage und Bearbeitung des Anbauteils gemäß der eingangs genannten Gattung. Ein solcher Adapter ist vorzugsweise ein etwa rahmenartiges Bauteil und umfasst wenigstens eine Strebe sowie Befestigungsmittel für wenigstens ein Außenblechteil und/oder ein Innenblechteil des Anbauteils. Ein solcher Adapter kann beispielsweise einen etwa rechteckigen oder trapezförmigen Umriss aufweisen. Der Adapter kann aus mehreren miteinander verbundenen Streben bestehen, umfassend vorzugsweise im Einbauzustand etwa horizontal verlaufende Streben, besonders bevorzugt wenigstens zwei zueinander etwa parallel verlaufende im Einbauzustand des Adapters etwa horizontal verlaufende Streben. Der Adapter kann beispielsweise eine obere in der Einbauposition an der Karosserie etwa horizontal verlaufende Strebe und eine zu dieser vorzugsweise etwa parallel verlaufende untere Strebe aufweisen, wobei vorzugsweise weitere Streben am Adapter vorgesehen sind, die die obere und die untere Strebe miteinander verbinden. Hierzu können beispielsweise etwa diagonal verlaufende Streben zur Aussteifung am Adapter vorgesehen sein. Ebenfalls können im Einbauzustand etwa vertikal verlaufende Streben und/oder Streben vorhanden sein, die zu einer unteren oder oberen Strebe des Adapters in einem spitzen oder stumpfen Winkel verlaufen. Die Befestigungsmittel für das Innenblechteil oder das Außenblechteil können beispielsweise an einer Strebe des Rahmens des Adapters angebracht sein. Weiterhin umfasst der Adapter vorzugsweise wenigstens einen Abstandhalter für eine Anbringung des Außenblechteils oder des Innenblechteils mit Abstand am Adapter.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die Erfindung unter Bezugnahme auf die beiliegenden Zeichnung anhand von Ausführungsbeispielen näher beschrieben. Dabei zeigen
- Fig. 1: eine Fahrzeugkarosserie im Rohzustand mit erfindungsgemäßen Anbauteilen in schematisch vereinfachter Darstellung nach Art einer Explosionsansicht;
- Fig. 2: eine Ansicht eines Außenblechteils einer Fahrzeugtür mit an diesem angebrachtem Adapter gemäß der Erfindung;
- Fig. 3: ein Außenblechteil einer Fahrzeugtür mit an diesem angebrachten Adapter gemäß der Erfindung, an einer Fahrzeugkarosserie schwenkbar angebracht gemäß einer Variante der Erfindung.

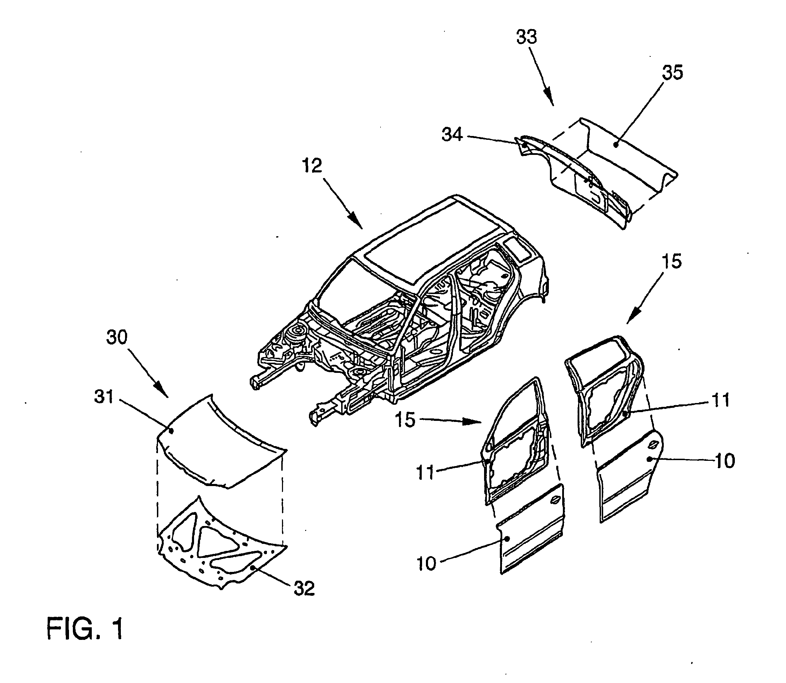

Zunächst wird auf Fig. 1 Bezug genommen. Die Darstellung zeigt in schematisch vereinfachter Explosionsdarstellung beispielhaft eine Fahrzeugkarosserie 12 im Rohzustand, an die diverse Anbauteile anzubringen sind. Diese Anbauteile umfassen beispielsweise eine Motorhaube 30 mit einem Außenblechteil 31 und einem Innenblechteil 32, die zunächst separat gefertigt werden und nach der Lackierung miteinander zu verbinden sind. Das vorgenannte Innenblechteil 32 der Motorhaube entspricht im Prinzip im Einbauzustand dem Unterteil der Motorhaube, während das vorgenannte Außenblech 31 im Einbauzustand das abdeckende Oberteil der Motorhaube bildet. Durch die erfindungsgemäße Verfahrensweise ist es insbesondere möglich, das Innenblechteil 32 der Motorhaube 30 und das Außenblechteil 31 in unterschiedlichen Farben zu lackieren.

Die Darstellung gemäß Fig. 1 zeigt weitere Beispiele für erfindungsgemäße Anbauteile. Zu diesen zählt auch die Heckklappe 33, die ebenfalls an die Fahrzeugkarosserie 12 zu montieren ist. Bei einer solchen Heckklappe 33 handelt es sich ebenfalls um ein bewegliches Anbauteil, da sie an der Fahrzeugkarosserie schwenkbar angebracht wird. Auch die Heckklappe 33 besteht aus einem Innenblechteil 34 und einem Außenblechteil 35, die zu einem einzigen Anbauteil 33 im Sinne der vorliegenden Erfindung miteinander zu verbinden sind. Auch hier kann das erfindungsgemäße Verfahren zur Montage und Bearbeitung der beiden Teile 34, 35 des Anbauteils 33 zum Einsatz kommen, so dass es beispielsweise möglich ist, eine unterschiedliche Lackierung für das Innenblechteil 34 beziehungsweise das Außenblechteil 35 vorzusehen und/oder zusätzliche Bauteile an dem Innenblechteil 34 anzubringen, bevor dieses mit dem Außenblechteil 35 verbunden wird.

Fig. 1 zeigt ein weiteres bevorzugtes Beispiel für Anbauteile im Sinne der vorliegenden Erfindung. Dies sind die beiden in der Zeichnung dargestellten Fahrzeugtüren 15, bei denen es sich ebenfalls um bewegliche Anbauteile handelt, die an der Fahrzeugkarosserie 12 schwenkbar angebracht werden. Es handelt sich in dem konkreten Beispiel um die vordere Fahrzeugtür an der Fahrerseite und die hintere Fahrzeugtür an der Fahrerseite. Wie man aus der Zeichnung erkennt ist jede der beiden Fahrzeugtüren jeweils ein Anbauteil 15 im Sinne der vorliegenden Erfindung umfassend jeweils ein Innenblechteil 11 und ein Außenblechteil 10, deren Montage und Bearbeitung jeweils nach dem erfindungsgemäßen Verfahren erfolgt, wie nachfolgend noch näher erläutert werden wird. Das Außenblechteil 10 kann wiederum jeweils eine Lackierung erhalten, die von derjenigen des Innenblechteils 11 abweicht.

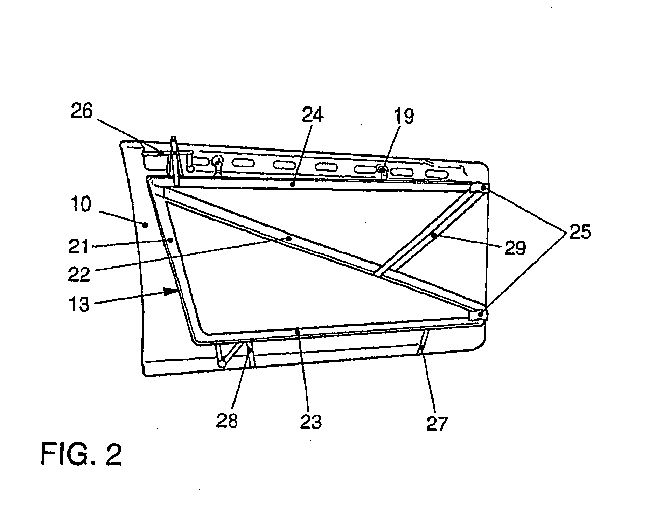

Fig. 2 zeigt in vergrößerter Darstellung ein Außenblechteil 10 gemäß einem ersten Ausführungsbeispiel der vorliegenden Erfindung, welches an einem rahmenartigen Adapter 13 angebracht ist. Bei dem Adapter 13 handelt es sich um ein im Wesentlichen rahmenartiges aus mehreren miteinander verbundenen Streben bestehendes im Grundriss etwa trapezförmiges Bauteil. Dieser Adapter 13 umfasst eine im Einbauzustand horizontale obere Strebe 24, eine zu dieser in etwa parallel verlaufende im Einbauzustand etwa horizontal angeordnete untere Strebe 23, eine sich vom einen Ende der unteren Strebe 23 in einem stumpfen Winkel leicht schräg nach oben erstreckende zum einen Ende der oberen Strebe 24 verlaufende Strebe 21, sowie eine in etwa diagonal verlaufende Strebe 22, die an ihrem in der Zeichnung linken oberen Ende mit der Strebe 21 verbunden ist. Zur Aussteifung ist eine weitere kürzere Strebe 25 vorgesehen, die sich mit Abstand von jeweils den Enden von der diagonal verlaufenden Strebe 22 aus in einem Winkel zu dem in der Zeichnung rechten Ende der oberen horizontalen Strebe 24 erstreckt. Somit bildet der Adapter 13 einen in sich stabilen ausgesteiften Rahmen, an dem das in der Zeichnung dargestellte Außenblechteil 10 über geeignete Befestigungsmittel vorzugsweise mit Abstand anbringbar ist. Die in der Zeichnung nur schematisch vereinfacht dargestellten Befestigungsmittel sind mit den Bezugszeichen 26, 27 und 28 bezeichnet und werden hier nicht im Detail erläutert. Es handelt sich beispielsweise um Klemmvorrichtungen, Rastmittel, Schraubvorrichtungen oder Befestigungsmittel, die mit dem Außenblechteil 10 über eine Klebeverbindung verbunden werden, die lösbar sein sollte. Außerdem sind, wie man in der Zeichnung gemäß Fig. 2 erkennt, Abstandhalter 19 vorgesehen, die an einer der Streben 24 des Adapters 13 angebracht sind und sich von dort aus zum Außenblechteil 10 erstrecken und dieses auf Abstand zum Adapter 13 halten, insbesondere um eine allseitige Lackierung des Außenblechteils 10 zu erleichtern.

Bei der Anbringung des Außenblechteils 10 mittels des Adapters 13 gemäß der Darstellung von Fig. 2 an der Karosserie in der für das Anbauteil vorgesehenen Position sollte die Öffnungs- beziehungsweise Schließfunktion der schwenkbar an der Karosserie angebrachten Tür gewährleistet sein. Dazu sind an einer Seite des Adapters 13 Scharnierelemente 25 angebracht. Diese Scharnierelemente 25 können mit komplementären Scharnierelementen an der Karosserie (nicht dargestellt) zusammenwirken. Die Funktion des erfindungsgemäßen Adapters 13 besteht wie bereits zuvor erwähnt wurde darin, eine zwischenzeitliche funktionsfähige positionsgenaue Anbringung des Außenblechteils 10 ohne das Innenblechteil der Fahrzeugtür an der Karosserie des Fahrzeugs zu ermöglichen, beispielsweise um das Außenblechteil mit der Fahrzeugkarosserie zu lackieren. Anschließend wird der Adapter 13 wieder von dem Außenblechteil 10 abgenommen, das Außenblechteil 10 wird mit dem Innenblechteil 11 (siehe Fig. 1) verbunden, nachdem das Innenblechteil 11 zuvor separat bearbeitet wurde. Die dann erhaltene vollständige Fahrzeugtür aus Außenblechteil 10 und mit diesem fest verbundenem Innenblechteil 11 wird dann wieder an der Fahrzeugkarosserie 12 angebracht. Die vorgenannte zwischenzeitliche Bearbeitung des Innenblechteils 11 vor der Verbindung mit dem Außenblechteil 10 umfasst insbesondere die Montage zusätzlicher Bauteile am Innenblechteil (in Fig. 1 nicht dargestellt), deren Montage wegen der besseren Zugänglichkeit vor der Anbringung des Außenblechteils 10 am Innenblechteil 11 wesentlich einfacher ist, sowie auch eine Lackierung des Innenblechteils 11, die insbesondere immer dann von dem Außenblechteil 10 separat erfolgt, wenn für Innenblechteile 11 und Außenblechteil 10 unterschiedliche Lackierungen vorgesehen sind.

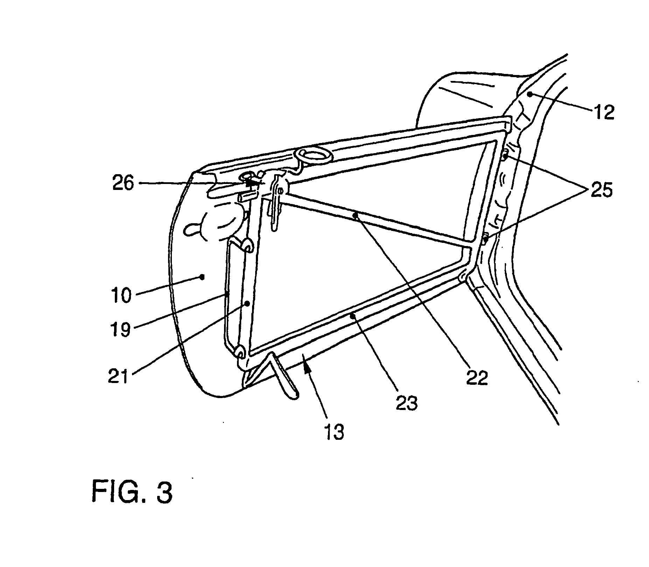

Fig. 3 zeigt ein weiteres Ausführungsbeispiel mit einem Außenblechteil an der vorderen Fahrerseite, welches schwenkbar an einer Fahrzeugkarosserie 12 angebracht ist. Das Außenblechteil 10 befindet sich an dem Adapter 13 und ist in Fig. 3 in der geöffneten Position dargestellt, so dass man auf die Innenseite des Außenblechteils 10 schaut. Das Innenblechteil 11 ist noch nicht vorhanden. Das Außenblechteil 10 ist aber über die Scharnierelemente 25 so an der Fahrzeugkarosserie 12 angebracht, dass es sich in der exakten späteren Einbauposition der fertigen Fahrzeugtür befindet. Dadurch ist gewährleistet, dass das Außenblechteil 10 mit der Fahrzeugkarosserie 12 in dieser Einbaulage lackiert werden kann und die gleiche Außenhautqualität im Hinblick auf Struktur, Glanzgrad, Farbton ect. erhält wie die übrige Karosserie.

Der in dem Ausführungsbeispiel gemäß Fig. 3 dargestellte Adapter ist ein ähnliches Rahmenbauteil wie zuvor anhand von Fig. 2. bei dem anderen Ausführungsbeispiel beschrieben. Der Grundriss des in Fig. 3 gezeigten Adapters 13 ist in etwa rechteckig. Es ist eine obere etwa horizontal verlaufende Strebe 24, eine untere etwa zu dieser parallele Strebe 23, eine diese verbindende im Einbauzustand etwa vertikal verlaufende Strebe 21 und eine diagonal verlaufende Strebe 22 vorgesehen. Die Anbringung des Außenblechteils 10 an dem Adapter 13 erfolgt über Befestigungsmittel 26 und es sind Abstandhalter 19 vorgesehen. Nach der Lackierung des Außenblechteils 10 mit der übrigen Karosserie 12 kann der Adapter 13 wieder vom Außenblechteil 10 abgenommen werden. Gemäß einer Variante des erfindungsgemäßen Verfahrens ist es auch möglich, sowohl das Außenblechteil 10 als auch das Innenblechteil 11 in der für den späteren Einbau vorgesehenen Position an der Fahrzeugkarosserie 12 schwenkbar anzubringen, wobei jedoch Außenblechteil 10 und Innenblechteil 11 noch voneinander getrennt vorliegen und erst dann miteinander verbunden werden, wenn vorgesehene Einbauteile für die Fahrzeugtür am Innenblechteil 11 montiert wurden.

### Bezugszeichenliste

- 10: Außenblechteil der Fahrzeugtür
- 11: Innenblechteil der Fahrzeugtür
- 12: Fahrzeugkarosserie
- 13: Adapter
- 15: Fahrzeugtüren (Anbauteile)
- 19: Abstandhalter
- 21: schräg nach oben verlaufende Strebe
- 22: diagonal verlaufende Strebe
- 23: untere Strebe
- 24: obere Strebe
- 25: Scharnierelemente
- 26, 27, 28: schematisch vereinfacht dargestellte Befestigungsmittel
- 30: Motorhaube
- 31: Außenblechteil der Motorhaube
- 32: Innenblechteil der Motorhaube
- 33: Heckklappe
- 34: Innenblechteil der Heckklappe
- 35: Außenblechteil der Heckklappe

## Patentansprüche

1. Verfahren zur Montage und Bearbeitung eines mindestens ein Innenblechteil und mindestens ein Außenblechteil umfassenden Anbauteils einer Karosserie eines Kraftfahrzeugs, bei dem man entweder nur das Innenblechteil ohne das Außenblechteil oder nur das Außenblechteil ohne das Innenblechteil oder Außenblechteil und Innenblechteil in der für das Anbauteil vorgesehenen Position an der Karosserie anbringt, bei dem danach mindestens ein Arbeitsschritt erfolgt, in dem entweder die Montage eines zusätzlichen Bauteils an Innenblechteil und/oder Außenblechteil oder eine Bearbeitung der Anordnung, insbesondere eine Lackierung, erfolgt und man erst danach Innenblechteil und Außenblechteil zur Schaffung des Anbauteils miteinander verbindet,
**dadurch gekennzeichnet, dass** man das Innenblechteil (11) und/oder das Außenblechteil (10) mit Hilfe von Betriebsmitteln (13) in der für das Anbauteil (15) vorgesehenen Position an der Karosserie (12) anbringt, danach in mindestens einem Schritt eine Lackierung mindestens des Außenblechteils (10) oder des Innenblechteils (11) erfolgt und in einem darauffolgenden Arbeitsschritt die Betriebsmittel wieder von dem Außenblechteil (10) oder dem Innenblechteil (11) entfernt werden.

2. Verfahren nach Anspruch 1, **dadurch gekennzeichnet, dass** als Betriebsmittel (13) wenigstens ein Adapter dient.

3. Verfahren nach Anspruch 2, **dadurch gekennzeichnet, dass** der Adapter (13) ein wenigstens eine Strebe umfassendes rahmenartiges Bauteil ist, welches Befestigungselemente zur Anbringung des Innenblechteils (11) oder des Außenblechteils (10) aufweist.

4. Verfahren nach Anspruch 2 oder 3, **dadurch gekennzeichnet, dass** das Anbauteil (15) eine Fahrzeugtür ist.

5. Verfahren nach Anspruch 4, **dadurch gekennzeichnet, dass** der Adapter (13) mindestens ein Scharnierelement (25) aufweist, um die Öffnungs- beziehungsweise Schließfunktion der Fahrzeugtür zu gewährleisten.

6. Verfahren nach einem der Ansprüche 1 bis 5, **dadurch gekennzeichnet, dass** man nur das Außenblechteil (10) ohne das Innenblechteil in der für das Anbauteil (15) vorgesehenen Position an der Karosserie (12) anbringt, danach in wenigstens einem Schritt eine Lackierung dieser Anordnung erfolgt und man erst danach das Innenblechteil (11), welches zuvor separat lackiert wurde, mit dem Außenblechteil zur Schaffung des Anbauteils (15) miteinander verbindet.

7. Verfahren nach Anspruch 6, **dadurch gekennzeichnet, dass** man das Außenblechteil (10) mit Hilfe von Betriebsmitteln, insbesondere mittels eines Adapters (13) in der für das Anbauteil (15) vorgesehenen Position an der Karosserie (12) anbringt, danach eine Lackierung der Anordnung erfolgt und anschließend die Betriebsmittel wieder von dem Außenblechteil entfernt werden.

8. Verfahren nach einem der vorherigen Ansprüche, **dadurch gekennzeichnet, dass** Außenblechteil (10) und Innenblechteil (11) Teile einer Fahrzeugtür sind und dass das insbesondere am Innenblechteil zu montierende zusätzliche Bauteil (14) ein türspezifisches Bauteil ist, welches in das Türinnere einzubauen ist.

9. Verfahren nach Anspruch 8, **dadurch gekennzeichnet, dass** das türspezifische Bauteil (14) ein Lautsprecher, ein Fensterheber oder dergleichen ist.

10. Verfahren nach einem der Ansprüche 1 bis 9, **dadurch gekennzeichnet, dass** Innenblechteil (11) und Außenblechteil (10) in unterschiedlicher Farbgebung lackiert werden oder eine hinsichtlich mindestens eines anderen Kriteriums unterschiedliche Lackierung erhalten.

11. Verfahren nach einem der Ansprüche 1 bis 10, **dadurch gekennzeichnet, dass** das Außenblechteil (10) in der für das Anbauteil (15) vorgesehenen Position an der Karosserie (12) angebracht und mit der Karosserie lackiert und das Innenblechteil (11) separat lackiert wird.

12. Verfahren nach einem der Ansprüche 1 bis 11, **dadurch gekennzeichnet, dass** das Außenblechteil (10) ohne das Innenblechteil (11) in der für das Anbauteil (15) vorgesehenen Position mit Hilfe von Betriebsmitteln (13) an der Karosserie (12) angebracht und mit dieser lackiert wird, danach das Außenblechteil von der Karosserie wieder abgenommen wird und die Betriebsmittel von diesem demontiert werden, dann Außenblechteil (10) und Innenblechteil (11) miteinander verbunden werden zur Schaffung des Anbauteils (15) und dann dieses Anbauteil wieder an der Karosserie (12) angebracht wird.

13. Verfahren nach einem der vorhergehenden Ansprüche, **dadurch gekennzeichnet, dass** zunächst das Innenblechteil (11) im Rohzustand in der für das Anbauteil (15) vorgesehenen Position an der Karosserie (12) angebracht wird, danach die Montage wenigstens eines zusätzlichen Bauteils (14) am Innenblechteil erfolgt, dann das Außenblechteil (10) an das Innenblechteil (11) montiert und diese miteinander verbunden werden und dabei in der vorgesehenen Position an der Karosserie (12) verbleiben und danach die ganze Anordnung lackiert wird.

14. Adapter zur Verwendung in einem Verfahren gemäß wenigstens einem der Ansprüche 1 bis 13, **dadurch gekennzeichnet, dass** dieser ein rahmenartiges Bauteil ist, welches wenigstens eine Strebe aufweist sowie Befestigungsmittel für wenigstens ein Außenblechteil (10) und/oder ein Innenblechteil (11).

15. Adapter nach Anspruch 14, **dadurch gekennzeichnet, dass** dieser einen etwa rechteckigen oder trapezförmigen Umriss aufweist.

16. Adapter nach Anspruch 14 oder 15, **dadurch gekennzeichnet, dass** dieser wenigstens eine obere im Einbauzustand etwa horizontal verlaufende Strebe (24) und wenigstens eine zu dieser etwa parallel verlaufende untere Strebe (23) aufweist.

17. Adapter nach einem der Ansprüche 14 bis 16, **dadurch gekennzeichnet, dass** dieser wenigstens eine etwa diagonal verlaufende Strebe (22) aufweist, die mit wenigstens einer weiteren Strebe (23, 24) verbunden ist.

18. Adapter nach einem der Ansprüche 14 bis 17, **dadurch gekennzeichnet, dass** dieser wenigstens eine im Einbauzustand etwa vertikal verlaufende Strebe (21) aufweist, die mit wenigstens einer weiteren Strebe (22, 23, 24) verbunden ist.

19. Adapter nach einem der Ansprüche 14 bis 18, **dadurch gekennzeichnet, dass** die Befestigungsmittel an wenigstens einer Strebe (21, 22, 23, 24) des Rahmens anbringbar sind.

20. Adapter nach einem der Ansprüche 14 bis 19, **dadurch gekennzeichnet, dass** dieser wenigstens einen Abstandhalter (19) für eine Anbringung eines Außenblechteils (10) oder eines Innenblechteils (11) mit Abstand an dem Adapter (13) aufweist.

## Claims

1. Method for assembling and working on an add-on part, which comprises at least one inner sheet metal part and at least one outer sheet metal part, of a motor vehicle body, in which method either only the inner sheet metal part without the outer sheet metal part, or only the outer sheet metal part without the inner sheet metal part, or the outer sheet metal part and the inner sheet metal part is/are attached to the body in the position provided for the add-on part, and in which method at least one working step then takes place in which either an additional component is assembled on the inner sheet metal part and/or on the outer sheet metal part, or the unit is worked on, in particular in a painting operation, and the inner sheet metal part and the outer sheet metal part are only connected to one another thereafter to produce the add-on part,
**characterized in that** the inner sheet metal part (11) and/or the outer sheet metal part (10) are/is attached to the body (12) in the position provided for the add-on part (15) with the aid of operating means (13), then, in at least one step, at least the outer sheet metal part (10) or the inner sheet metal part (11) is painted, and in a subsequent working step, the operating means are removed again from the outer sheet metal part (10) or from the inner sheet metal part (11).

2. Method according to Claim 1, **characterized in that** at least one adaptor serves as the operating means (13).

3. Method according to Claim 2, **characterized in that** the adaptor (13) is a frame-like component which comprises at least one strut and which has fastening elements for attaching the inner sheet metal part (11) or the outer sheet metal part (10).

4. Method according to Claim 2 or 3, **characterized in that** the add-on part (15) is a vehicle door.

5. Method according to Claim 4, **characterized in that** the adaptor (13) has at least one hinge element (25) to ensure that the vehicle door can be opened and closed.

6. Method according to one of Claims 1 to 5, **characterized in that** only the outer sheet metal part (10) without the inner sheet metal part is attached to the body (12) in the position provided for the add-on part (15), then, in at least one step, this unit is painted, and the inner sheet metal part (11), which was separately painted previously, and the outer sheet metal part are only connected to one another thereafter to produce the add-on part (15).

7. Method according to Claim 6, **characterized in that** the outer sheet metal part (10) is attached to the body (12) in the position provided for the add-on part (15) with the aid of operating means, in particular by means of an adaptor (13), then the unit is painted, and the operating means are subsequently removed again from the outer sheet metal part.

8. Method according to one of the preceding claims, **characterized in that** the outer sheet metal part (10) and the inner sheet metal part (11) are parts of a vehicle door and **in that** the additional component (14), which is to be assembled in particular on the inner sheet metal part, is a door-specific component which is to be installed into the interior of the door.

9. Method according to Claim 8, **characterized in that** the door-specific component (14) is a loudspeaker, a window regulator or the like.

10. Method according to one of Claims 1 to 9, **characterized in that** the inner sheet metal part (11) and the outer sheet metal part (10) are painted in different colours or are painted differently with regard to at least one other criterion.

11. Method according to one of Claims 1 to 10, **characterized in that** the outer sheet metal part (10) is attached to the body (12) in the position provided for the add-on part (15) and is painted with the body, and the inner sheet metal part (11) is painted separately.

12. Method according to one of Claims 1 to 11, **characterized in that** the outer sheet metal part (10) without the inner sheet metal part (11) is attached to the body (12) in the position provided for the add-on part (15) with the aid of operating means (13) and is painted with said body, then the outer sheet metal part is removed from the body again and the operating means are detached from said outer sheet metal part, then the outer sheet metal part (10) and the inner sheet metal part (11) are connected to one another to produce the add-on part (15), and then this add-on part is attached to the body (12) again.

13. Method according to one of the preceding claims, **characterized in that**, firstly, the inner sheet metal part (11) is attached in its unprocessed state to the body (12) in the position provided for the add-on part (15), then at least one additional component (14) is assembled on the inner sheet metal part, then the outer sheet metal part (10) is assembled on the inner sheet metal part (11) and these are connected to one another and in this case remain in the provided position on the body (12), and then the entire unit is painted.

14. Adaptor for use in a method according to at least one of Claims 1 to 13, **characterized in that** this is a frame-like component which has at least one strut and also fastening means for at least one outer sheet metal part (10) and/or one inner sheet metal part (11).

15. Adaptor according to Claim 14, **characterized in that** this has an approximately rectangular or trapezoidal outline shape.

16. Adaptor according to Claim 14 or 15, **characterized in that** this has at least one upper strut (24) which, when installed, runs approximately horizontally, and at least one lower strut (23), which runs approximately parallel to the latter.

17. Adaptor according to one of Claims 14 to 16, **characterized in that** this has at least one approximately diagonally-running strut (22) which is connected to at least one further strut (23, 24).

18. Adaptor according to one of Claims 14 to 17, **characterized in that** this has at least one strut (21) which, when installed, runs approximately vertically and which is connected to at least one further strut (22, 23, 24).

19. Adaptor according to one of Claims 14 to 18, **characterized in that** the fastening means can be attached to at least one strut (21, 22, 23, 24).

20. Adaptor according to one of Claims 14 to 19, **characterized in that** this has at least one spacer (19) for attaching an outer sheet metal part (10) or an inner sheet metal part (11), with a space, to the adaptor (13).

## Revendications

1. Procédé pour le montage et l'usinage d'une pièce rapportée d'une carrosserie de véhicule automobile comprenant au moins une partie de tôle interne et au moins une partie de tôle externe, seulement la partie de tôle interne sans la partie de tôle externe ou seulement la partie de tôle externe sans la partie de tôle interne, ou bien la partie de tôle externe et la partie de tôle interne étant montées sur la carrosserie dans la position prévue pour la pièce rapportée, ensuite au moins une étape de travail étant effectuée, dans laquelle soit le montage d'un composant supplémentaire sur la partie de tôle interne et/ou la partie de tôle externe est effectué, soit un usinage de l'agencement, notamment un laquage, est effectué et l'on assemble ensuite la partie de tôle interne et la partie de tôle externe l'une à l'autre pour former la pièce rapportée,
**caractérisé en ce que** l'on monte sur la carrosserie (12) la partie de tôle interne (11) et/ou la partie de tôle externe (10) à l'aide de moyens fonctionnels (13) dans la position prévue pour la partie rapportée (15), puis, dans au moins une étape, on effectue un laquage d'au moins la partie de tôle externe (10) ou de la partie de tôle interne (11) et dans une étape de travail subséquente, les moyens fonctionnels sont à nouveau enlevés de la partie de tôle externe (10) ou de la partie de tôle interne (11).

2. Procédé selon la revendication 1, **caractérisé en ce qu'**au moins un adaptateur sert de moyen fonctionnel (13).

3. Procédé selon la revendication 2, **caractérisé en ce que** l'adaptateur (13) est un composant de type cadre comprenant au moins une entretoise, qui présente des éléments de fixation pour le montage de la partie de tôle interne (11) ou de la partie de tôle externe (10).

4. Procédé selon la revendication 2 ou 3, **caractérisé en ce que** la pièce rapportée (15) est une porte de véhicule.

5. Procédé selon la revendication 4, **caractérisé en ce que** l'adaptateur (13) présente au moins un élément de charnière (25) pour garantir la fonction d'ouverture ou de fermeture de la porte de véhicule.

6. Procédé selon l'une quelconque des revendications 1 à 5, **caractérisé en ce que** l'on ne monte sur la carrosserie (12) que la partie de tôle externe (10) sans la partie de tôle interne dans la position prévue pour la pièce rapportée (15), puis, dans au moins une étape, on effectue un laquage de cet agencement et l'on assemble seulement ensuite entre elles la partie de tôle interne (11) qui a préalablement été laquée séparément, et la partie de tôle externe pour réaliser la pièce rapportée (15).

7. Procédé selon la revendication 6, **caractérisé en ce que** l'on monte sur la carrosserie (12) la partie de tôle externe (10) à l'aide de moyens fonctionnels, notamment au moyen d'un adaptateur (13), dans la position prévue pour la pièce rapportée (15), puis on effectue un laquage de l'agencement et ensuite les moyens fonctionnels sont à nouveau enlevés de la partie de tôle externe.

8. Procédé selon l'une quelconque des revendications précédentes, **caractérisé en ce que** la partie de tôle externe (10) et la partie de tôle interne (11) sont des pièces d'une porte de véhicule et **en ce qu'**en particulier le composant supplémentaire (14) à monter sur la partie de tôle interne est un composant spécifique à la porte, qui doit être incorporé à l'intérieur de la porte.

9. Procédé selon la revendication 8, **caractérisé en ce que** le composant spécifique à la porte (14) est un haut-parleur, un lève-glace ou similaire.

10. Procédé selon l'une quelconque des revendications 1 à 9, **caractérisé en ce que** la partie de tôle interne (11) et la partie de tôle externe (10) sont laquées avec des couleurs différentes ou reçoivent un laquage différent suivant au moins un autre critère.

11. Procédé selon l'une quelconque des revendications 1 à 10, **caractérisé en ce que** la partie de tôle externe (10) est montée sur la carrosserie (12) dans la position prévue pour la pièce rapportée (15) et est laquée avec la carrosserie et la partie de tôle interne (11) est laquée séparément.

12. Procédé selon l'une quelconque des revendications 1 à 11, **caractérisé en ce que** la partie de tôle externe (10) est montée sur la carrosserie (12) sans la partie de tôle interne (11) dans la position prévue pour la partie rapportée (15) à l'aide de moyens fonctionnels (13) et est laquée avec celle-ci, puis la partie de tôle externe est à nouveau enlevée de la carrosserie et les moyens fonctionnels sont démontés de celle-ci, puis la partie de tôle externe (10) et la partie de tôle interne (11) sont assemblées l'une à l'autre pour fournir la pièce rapportée (15) et ensuite cette pièce rapportée est à nouveau montée sur la carrosserie (12).

13. Procédé selon l'une quelconque des revendications précédentes, **caractérisé en ce que** la partie de tôle interne (11) est d'abord montée sur la carrosserie (12) dans l'état brut dans la position prévue pour la pièce rapportée (15), puis le montage d'au moins un composant supplémentaire (14) sur la partie de tôle interne est effectué, puis la partie de tôle externe (10) est montée sur la partie de tôle interne (11) et celles-ci sont assemblées l'une à l'autre et restent ainsi dans la position prévue sur là carrosserie (12) puis l'ensemble est laqué.

14. Adaptateur pour l'utilisation dans un procédé selon au moins l'une quelconque des revendication 1 à 13, **caractérisé en ce que** celui-ci est un composant de type cadre, qui présente au moins une entretoise ainsi que des moyens de fixation pour au moins une partie de tôle externe (10) et/ou une partie de tôle interne (11).

15. Adaptateur selon la revendication 14, **caractérisé en ce que** celui-ci présente un contour approximativement rectangulaire ou trapézoïdal.

16. Adaptateur selon la revendication 14 ou 15, **caractérisé en ce que** celui-ci présente au moins une entretoise supérieure dans l'état monté (24), s'étendant approximativement horizontalement et au moins une entretoise inférieure (23) s'étendant approximativement parallèlement à celle-ci.

17. Adaptateur selon l'une quelconque des revendications 14 à 16, **caractérisé en ce que** celui-ci présente au moins une entretoise (22) s'étendant approximativement en diagonale, qui est connectée à au moins une autre entretoise (23, 24).

18. Adaptateur selon l'une quelconque des revendications 14 à 16, **caractérisé en ce que** celui-ci présente au moins une entretoise (21) s'étendant approximativement verticalement dans l'état monté, laquelle est connecté à au moins une autre entretoise (22, 23, 24).

19. Adaptateur selon l'une quelconque des revendications 14 à 18, **caractérisé en ce que** les moyens de fixation peuvent être montés sur au moins une entretoise (21, 22, 23, 24) du cadre.

20. Adaptateur selon l'une quelconque des revendications 14 à 19, **caractérisé en ce que** celui-ci présent au moins un élément d'espacement (19) pour un montage d'une partie de tôle extérieure (10) ou d'une partie de tôle intérieure (11) sur l'adaptateur (13) à une certaine distance de celui-ci.
